# EUROPÄISCHE PATENTANMELDUNG

(11) **EP 1 752 678 A2**
(43) Veröffentlichungstag der Anmeldung: **14.02.2007**
(21) Anmeldenummer: 06016492.8
(22) Anmeldetag: 08.08.2006
(51) Int. Cl.: F16D 65/12

(54) **Verfahren zum Aufarbeiten eines Rotors einer Reibungsbremse und ein damit aufgearbeiteter Rotor**

(30) Priorität: 12.08.2005 DE 102005038221
(71) Anmelder: KNORR-BREMSE SYSTEME FÜR NUTZFAHRZEUGE GMBH, 80809 München (DE)
(72) Erfinder: Pahle, Wolfgang, 83707 Bad Wiessee (DE)
(74) Vertreter: Mattusch, Gundula

(57) **Zusammenfassung**

Verfahren zum Aufarbeiten eines Rotors (1) einer Reibungsbremse, wobei der Rotor eine Bremsscheibe oder eine Bremstrommel ist und einen Grundkörper (7) aus einem Eisengusswerkstoff aufweist, mit den folgenden Verfahrensschritten: (VS1) Sortieren von gesammelten Rotoren nach unterschiedlichem Aufbau und Abmessungen und Ausschließen von defekten Rotoren; (VS2) Reinigen der sortierten Rotoren; (VS3) Prüfen der gereinigten Rotoren auf Eignung; (VS4) Bearbeiten der geprüften geeigneten Rotoren; (VS5) Aufbringen von Verschleißschichten auf die Rotoren; und (VS6) Endbearbeiten der aufgebrachten Verschleißschichten und Bereitstellen der aufgearbeiteten Rotoren, sowie ein entsprechend aufgearbeiteter Rotor.

## Beschreibung

Die Erfindung betrifft ein Verfahren zum Aufarbeiten eines Rotors einer Reibungsbremse, wobei der Rotor eine Bremsscheibe oder eine Bremstrommel ist und einen Grundkörper aus einem Eisengusswerkstoff aufweist, sowie einen entsprechend aufgearbeiteten Rotor.

Im Automobilbau ist es üblich, bei Ausfall bestimmter Aggregate oder Funktionsgruppen diese nicht durch fabrikneue, sondern aufgearbeitete gebrauchte Aggregate zu ersetzen. Hierzu gehören Lichtmaschinen, Wasserpumpen, Motoren, Kupplungen usw. Ein solches Aggregat ist zum Beispiel als Austauschmotor bekannt.

In den meisten Fällen ist die Substanz eines solchen Aggregates noch in einem sehr guten Zustand, so dass nur die durch Verschleiß geschädigten Bauteile erneuert werden.

Bremsrotoren werden jedoch durch Neuteile ersetzt. Eine Erneuerung einer Bremsscheibe oder einer Bremstrommel ist immer dann erforderlich, wenn ein so genanntes Verschleißendmaß erreicht ist, oder durch Verformungen bzw. ungleichen Verschleiß ein so genanntes Rubbeln auftritt, oder durch extreme Belastungen starke Risse in diesem Bauteil entstanden sind. Die ersetzten Bauteile werden dann in einer Gießerei wieder eingeschmolzen. Bei den Bremsscheiben sind dann jedoch nur bis maximal 20% der eigentlichen so genannten Reibringdicken aufgebraucht.

Das Dokument PCT/EP01/12719 beschreibt eine Bremsscheibe mit einer Verschleißschicht, die auf einem Grundkörper in einem Lichtbogenprozess aufgetragen wird, wobei diese Verschleißschicht aus chromhaltigen Metall besteht und beim Auftragungsprozess, das heißt bei einem Spritzprozess Karbide und Oxide entstehen.

DE 101 20 326 beschreibt ein Beispiel einer Bremstrommel, die in einem Lichtbogenprozess mit einer Verschleißschicht versehen ist.

Die Aufgabe der vorliegenden Erfindung besteht darin, durch einen Ersatz des verschlissenen Reibringvolumens durch einen entsprechenden Werkstoff die Altteile wieder nutzen zu können.

Erfindungsgemäß wird diese Aufgabe durch ein Verfahren mit den Merkmalen des Anspruchs 1 gelöst. Die Erfindung schafft weiterhin einen mit diesem Verfahren aufgearbeiteten Rotor mit den Merkmalen des Anspruchs 27.

Die der Erfindung zugrunde liegende Idee besteht darin, den Ersatz des verschlissenen Reibringvolumens durch Auftragen einer Verschleißschicht vorzunehmen. Diese Verschleißschicht besteht aus einem höherwertigeren Material als der Grundkörper bzw. Reibring des Rotors. Daraus ergibt sich der Vorteil, dass es nicht erforderlich ist, die vollständige Verschleißdicke bzw. das abgetragene Reibringvolumen wieder aufzubringen, und einen deutlich geringeren Auftrag zu verwenden.

Hierbei kommen die bekannten Auftragsverfahren aus PCT/EP01/12719 und DE 101 20 326 zur Anwendung, deren Erfahrungswerte den Vorteile liefern, beispielsweise, dass eine noch längere Lebensdauer des so aufgearbeiteten Rotors im Vergleich zu der Lebensdauer des Originalersatzteils erreicht wird.

Das erfindungsgemäße Verfahren zum Aufarbeiten eines Rotors einer Reibungsbremse, wobei der Rotor eine Bremsscheibe oder eine Bremstrommel ist und einen Grundkörper aus einem Eisengusswerkstoff aufweist, weist die folgenden Verfahrensschritte auf:
- (VS1): Sortieren von gesammelten Rotoren nach unterschiedlichem Aufbau und Abmessungen und Ausschließen von defekten Rotoren;
- (VS2): Reinigen der sortierten Rotoren;
- (VS3): Prüfen der gereinigten Rotoren auf Eignung;
- (VS4): Bearbeiten der geprüften geeigneten Rotoren;
- (VS5): Aufbringen von Verschleißschichten auf die Rotoren; und
- (VS6): Endbearbeiten der aufgebrachten Verschleißschichten und Bereitstellen der aufgearbeiteten Rotoren.

Die zur Aufarbeitung gesammelten Rotoren werden nach unterschiedlichen Kriterien sortiert, wobei defekte Teile ausgesondert werden. Dadurch lässt sich das erfindungsgemäße Verfahren besonders effektiv auf die unterschiedlichen Rotoren anwenden, indem jeweils diesen angepasste Bearbeitungseinrichtungen vorgesehen sind.

Es ist vorteilhaft, dass die Rotoren gereinigt werden, welches im Verfahrensschritt (VS2) Reinigen durch Waschen und Entrosten erfolgt. Dadurch lassen sich auch weitere Defekte erkennen, wodurch eine erneute Aussonderung von Teilen erfolgt, die sich nicht mehr zur Aufarbeitung eignen.

Im Verfahrensschritt (VS6) Endbearbeiten werden abtragende und/oder umformende Endbearbeitungen vorgenommen, welche eine definierte Rauigkeit der Verschleißschicht als Reibfläche erzeugen.

Die im Verfahrensschritt (VS5) aufgebrachte Verschleißschicht ist eine metallische Spritzbeschichtung, welche im Flamm-, Lichtbogen- oder Plasmaspritzbeschichtungsverfahren oder im Explosionsbeschichtungsverfahren aufgebracht wird und aus einem härteren Metall als der Grundkörper besteht, welches oxidationsresistenter und verschleißresistenter als der Grundkörper ist, und wobei die Spritzbeschichtung mittels eines Spritzdrahtes ausgeführt wird, der einen Cr-Gehalt von mehr als 20 Gewichtsprozent aufweist. Ein Spritzdraht mit mehr als 20 Gewichtsprozent an Cr führt zu einer verbesserten Korrosionsbeständigkeit bei ansonsten weiter guten Eigenschaften der Verschleißschicht.

Es ist zweckmäßig, dass der Spritzdraht einen Cr-Gehalt von 25 bis 30 Gewichtsprozent, insbesondere 28 Gewichtsprozent aufweist, da sich dieser Einsatz für eine besonders deutliche Reduzierung der Korrosionsanfälligkeit bei weiter guten Verschleißeigenschaften bewährt hat.

Es ist vorteilhaft, dass der Spritzdraht ergänzend zur Erhöhung des Cr-Gehalts einen Kohlenstoffgehalt von mindestens 0,5 Gewichtsprozent aufweist, da dies zu einer erhöhten Karbidbildung - also zu großer Verschleißresistenz ― führt, ohne die Korrosionsfreiheit zu verlieren.

In einer besonders bevorzugten Ausführungsform, die auch als eine selbständige Erfindung zu betrachten ist, ist vorgesehen, dass auf dem Grundkörper im Verfahrensschritt (VS5) vor dem Aufbringen der Verschleißschicht eine Sperrschicht aufgebracht wird, welche aus einem weicheren metallischen Material als die Verschleißschicht besteht und vorzugsweise eine Dicke von 0,05 bis 0,1 mm aufweist. Die Sperrschicht kann Molybdän oder Nickel enthalten.

Die Sperrschicht führt zu einer gleichmäßigen und guten Wärmeverteilung, schützt den Grundkörper im Bereich der Sperrschicht ergänzend vor Korrosion und reduziert durch ihre Zähigkeit und geringere Härte Eigenspannungen in der Spritzbeschichtung, das heißt in der Verschleißschicht.

Besonders bevorzugt wird nach einer weiteren - wiederum vorzugsweise optional aber auch selbständig zu betrachtenden - Variante, dass im Verfahrensschritt (VS5) nach dem Aufbringen der Verschleißschicht eine Wärmebehandlung durch geführt wird. Dadurch werden vorteilhaft Eigenspannungen reduziert und es erfolgt eine weitere Ausscheidung von Karbiden.

Es ist in einer Ausgestaltung vorgesehen, dass die Wärmebehandlung nach dem Aufbringen der Verschleißschicht bei ca. 650°C zwischen 600°C und 700°C durchgeführt wird. Die Wärmebehandlung wird in einer weiteren Ausführungsform mittels eines Induktionsverfahrens durchgeführt.

Hierbei werden in weiterer Ausgestaltung die Verschleißschichten stark erhitzt und die Rotoren sofort nach der Erwärmung relativ zum Erhitzen langsam wieder abgekühlt.

Als ganz besonderer Vorteil hat sich die Kombination der Maßnahmen erhöhter Cr-Gehalt, weichere Sperrschicht und Wärmebehandlung herausgestellt, die zu einer weitgehend korrosionsbeständigen und dennoch verschleißfesten und abspaltsicheren Reibschicht zum Zusammenwirken mit einem Bremsbelag einer Reibungsbremse führt.

In einer weiteren Ausführungsform ist das erfindungsgemäße Verfahren dadurch gekennzeichnet, dass die im Verfahrensschritt (VS5) aufgebrachte Verschleißschicht eine metallische Spritzbeschichtung ist, welche im Flamm-, Lichtbogen- oder Plasmaspritzbeschichtungsverfahren oder im Explosionsbeschichtungsverfahren aufgebracht wird und aus einem härteren Metall als der Grundkörper besteht, welches oxidationsresistenter und verschleißresistenter als der Grundkörper ist, und wobei die Spritzbeschichtung aus einem unlegierten oder legierten Stahl besteht.

In bevorzugter Ausführung ist vorgesehen, dass die Spritzbeschichtung aus einer Cr enthaltenden Stahllegierung besteht. Insbesondere liegt der Cr-Gehalt der Spritzbeschichtung zwischen 10 und 20%, zwischen 13 und 19%, zwischen 15 und 17% oder besonders bevorzugt bei 16%.

Ganz besonders bewährt hat sich eine Verschleißschicht bewährt, bei welcher der die Spritzbeschichtung bildende legierte Stahl folgende Zusätze enthält: 16% Cr; 0,44% Ni; 0,43% Mn; 1,01% Mo; und 0,36% C.

Bewährt sich weiterhin, dass die Verschleißschicht eine axiale Erstreckung von 0,3 bis 1,5 mm, vorzugsweise 0,5 bis 1,2 mm, insbesondere 0,6 bis 0,9 mm aufweist. Mit einer axialen Erstreckung, das heißt mit einer Beschichtungsdicke von 0,7 mm lässt sich bei Einsatz einer Spritzgussbeschichtung mit hohem Cr-Gehalt oftmals eine Verdoppelung der Lebensdauer des so aufgearbeiteten Rotors erreichen.

In einer weiteren Ausgestaltung des erfindungsgemäßen Verfahrens ist vorgesehen, dass das Reinigen im Verfahrensschritt (VS2) ein Aufrauen der Oberfläche und/oder ein Beseitigen von Oxidationsschichten durch Partikelstrahlen erfolgt, wodurch sich eine bessere Haftung der Verschleißschicht ergibt.

Ein aufgearbeiteter Rotor einer Reibungsbremse, wobei der Rotor eine Bremsscheibe oder eine Bremstrommel ist und einen Grundkörper aus einem Eisengusswerkstoff aufweist, ist nach einer Ausführungsform des erfindungsgemäßen Verfahrens aufgearbeitet.

Vorteilhafte Ausgestaltungen und Weiterbildungen der Erfindung sind Gegenstand der Unteransprüche sowie der Beschreibung unter Bezugnahme auf die Zeichnung.

Nachfolgend wird die Erfindung anhand der in den schematischen Figuren der Zeichnung angegebenen Ausführungsbeispiele näher erläutert. Es zeigt dabei:
- Figur 1: eine Schnittansicht eines Ausführungsbeispiels eines erfindungsgemäßen aufgearbeiteten Rotors; und
- Figur 2: ein beispielhaftes Flussdiagramm eines erfindungsgemäßen Verfahrens.

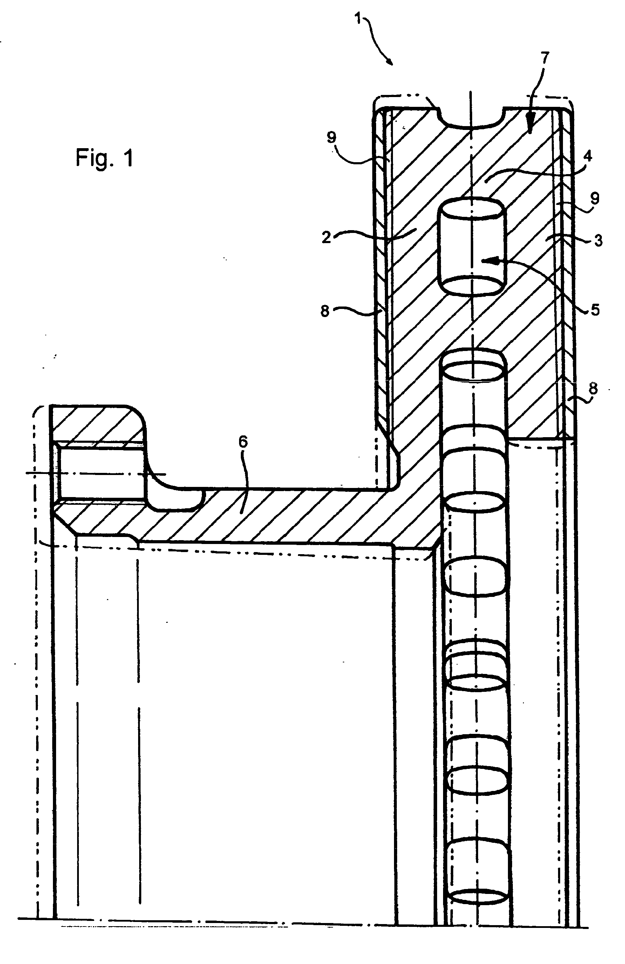

In Fig. 1 ist ein aufgearbeiteter Rotor 1 in einer Schnittansicht beispielhaft dargestellt. Bei diesem Beispiel handelt es sich um einen Rotor 1 in Ausführung einer Bremsscheibe, die zwei Reibringe 2 und 3 aufweist, welche über Stege 4 einstückig miteinander verbunden sind. Das Beispiel zeigt außerdem einen Lüftkanal 5 zwischen den Stegen 4. An dem einen Reibring 2 ist ein topfartiger Ansatz 6 zur Befestigung der Bremsscheibe an einer hier nicht dargestellten Radnabe gezeigt. Selbstverständlich kann der Rotor 1 auf Grund der Vielzahl von Varianten eine andere Gestalt aufweisen.

Die beiden Reibringe 2, 3 sowie die Stege 4 (und hier auch der Ansatz 6) bilden zusammen einen einstückigen Grundkörper 7 der Bremsscheibe bzw. des Rotors 1.

Ein analoger - entsprechend anders konstruierter ― Grundkörper kann für eine Bremstrommel realisiert werden (hier nicht gezeigt).

Die Reibringe 2 und 3 sind an ihren axialen Außenflächen jeweils mit einer Verschleißschicht 8, einer so genannten Reibschicht, versehen, welche Reibflächen in Zusammenwirkung mit nicht gezeigten Bremsbelägen einer Reibungsbremse bilden. Diese Verschleißschicht 8 ist auf die Reibringe 2 und 3 in einem weiter unten ausführlich beschriebenen Verfahren aufgebracht. Sie bedeckt die Reibringe 2 und 3 auf ihren Axialflächen vollständig.

Die Verschleißschicht 8 wird in bekannter Weise bei einem Bremsvorgang einem Verschleiß ausgesetzt, wobei ein Abrieb entsteht und die Verschleißschicht 8 in ihrer axialen Erstreckung bis auf ein so genanntes Verschleißendmaß verringert wird.

Zwischen der Verschleißschicht 8 und dem jeweiligen Reibring 2, 3 ist in diesem Beispiel eine Sperrschicht 9 angeordnet, deren Funktion weiter unten beschrieben wird.

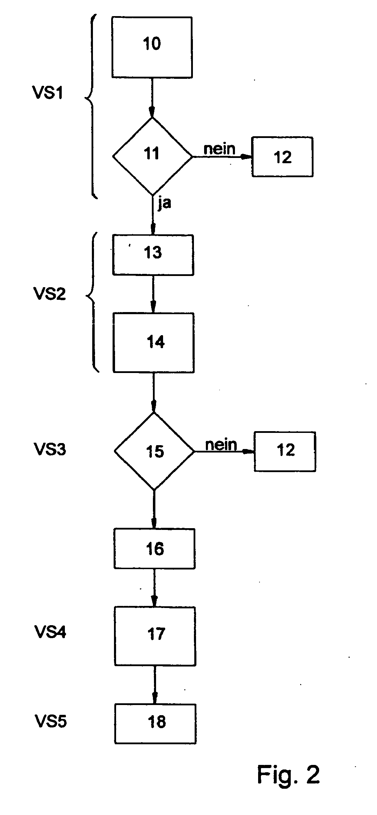

Gebrauchte Rotoren 1 sind zum Teil bis auf die Reibringe 2, 3 abgetragen. Sie sind zum Beispiel ursprünglich nur mit Reibringen 2, 3 ausgebildet, welche selbst die Verschleißschicht 8 bilden. In dem erfindungsgemäßen Verfahren, welches in Fig. 2 dargestellt ist, werden die gebrauchten Rotoren 1 so aufgearbeitet, dass sie wieder in voller Funktion verwendet werden können.

Die gebrauchten Rotoren 1 werden zunächst gesammelt und sortiert. Das Sortieren 10 erfolgt nach Größe und Typ. Dabei können schon bei einem Prüfen 11 offensichtlich defekte und nicht mehr zur Aufarbeitung geeignete Rotoren 1 als Ausschuss 12 aussortiert werden. Dieses Prüfen 11 umfasst beispielsweise eine Prüfung auf Risse, welche auch entsprechend automatisiert sein kann.

Sortieren 10 und Prüfen 11 bilden einen ersten Verfahrensschritt VS 1.

Anschließend erfolgt in einem zweiten Verfahrensschritt VS2 ein Waschen 13 zur Grobreinigung und ein Entrosten 14, das zum Beispiel in einem Beizvorgang erfolgt. Ein Aufrauen der Oberfläche ist beispielsweise mit Sandstrahlen bzw. Partikelstrahlen möglich.

In einem dritten Verfahrensschritt VS3 können die so gesäuberten und entrosteten Teile weiter durch ein Vermessen 15 geprüft werden, ob sich noch weitere Ausschussteile ergeben. Dabei werden die Rotoren 1 beispielsweise axial zur Feststellung eines definierten Endverschleißmaßes vermessen. Ist dieses überschritten, das heißt, ist ein vorgebbarer Grenzwert überschritten, so ist dieses Teil ebenfalls nicht mehr zur Aufarbeitung geeignet und ist Ausschuss 12.

Ein vierter Verfahrensschritt VS4 schließt sich mit einem Aufbringen 17 einer neuen Verschleißschicht an. Diese ist nicht mit dem Werkstoff des Grundkörpers 7 identisch, sondern besteht aus einem höherwertigeren verschleißfesteren Material.

Das Aufbringen 17 der Verschleißschicht 8 erfolgt beispielsweise in einem Flamm-, Lichtbogen- oder Plasmaspritzbeschichtungsverfahren oder in einem Explosionsbeschichtungsverfahren als Spritzbeschichtung, die metallisch und verschleißresistent ist.

Da die metallische Spritzbeschichtung als Verschleißschicht 8 härter als der Grundkörper 7 ist, wird die Lebensdauer des Rotors 1 erhöht. Die wesentlichen Vorteile des Grundkörpers 7 bleiben aber hinsichtlich der Wärmeleitfähigkeit und der Neigung zur Rissbildung, wenn der Grundkörper 7 beispielsweise aus Grauguss besteht, erhalten oder werden durch das Auftragen der Spritzbeschichtung verbessert.

Da die Verschleißreduzierung maßgeblich auf der Bildung von Karbiden und Oxiden aus dem Chrom (Cr) und anderen Bestandteilen des eingesetzten Materials im Spritzprozess beruht, müssen diese Bestandteile in ausreichender Konzentration vorhanden sein.

Beim Einsatz eines Spritzdrahts mit 17% Cr nach dem Stand der Technik werden in der Spritzbeschichtung 5 bis 7% in Chromkarbide und Chromoxide umgewandelt. Gleichzeitig fällt der Anteil des freien Chroms auf 10 bis 13% ab, wodurch die Schicht zwar verschleißfest aber auch anfällig gegen Korrosion wird.

Durch den erfindungsgemäßen Einsatz von Spritzdrähten mit erhöhtem Cr-Gehalt von insbesondere 25 bis 30% Cr, insbesondere 28% Cr kann dagegen auf einfache Weise eine genügende Korrosionsbeständigkeit gegen Salzwasser erzielt werden.

Gleichzeitig kann durch einen Kohlenstoffgehalt von mindestens 0,5% die Karbidbildung deutlich gesteigert werden. Damit erhöhen sich aber auch die Gesamthärte der Schicht und die inneren Spannungen.

Bei stärkeren Bremsungen kann es dann u.U. zu Rissen in der Spritzbeschichtung kommen, die im Extremfall zu einem Ablösen der Schicht führen. Diesem Effekt kann wiederum auf einfache Weise durch eine Wärmebehandlung begegnet werden, die nach dem Aufbringen 17 der Verschleißschicht 8 vor einem Endbearbeiten 18 noch im Verfahrensschritt VS5 durchgeführt wird. Verbesserte Ergebnisse erbringt eine Wärmebehandlung bei 650°C.

Zur weiteren Verbesserung der Haftung der Spritzbeschichtung am Grundwerkstoff des Grundkörpers 7 ist die Sperrschicht 9 (siehe Fig. 1) zwischen Verschleißschicht 8 und Grundkörper 7 von Vorteil.

Die Sperrschicht 9 hat die Aufgabe einer gleichmäßigen Wärmeverteilung, eines Korrosionsschutzes des Grundkörpers 7. Außerdem reduziert es durch seine Zähigkeit und geringere Härte Eigenspannungen in der Verschleißschicht 8.

Besonders sind zur Realisierung der Sperrschicht 9 Molybdän und/oder stark nickelhaltige Werkstoffe geeignet.

Diese Sperrschicht 9 wird bevorzugt ebenfalls in einem Spritzprozess zu Beginn des Verfahrensschritts VS5 aufgebracht. In Versuchen wurde der vorteilhafte Effekt für eine nickelhaltige Sperrschicht 9 bestätigt.

Durch die im Vergleich zu der chromhaltigen Verschleißschicht 8 deutlich geringere Härte (150 bis 180 HV1) der Sperrschicht 9 mit Nickelgehalt können Spannungen in der Verschleißschicht deutlich reduziert werden. Die Reibringe 2, 3 sind somit weniger anfällig gegen feine Spannungsrisse.

Begünstigt wird dies auch durch die deutlich höhere Wärmeleitfähigkeit der nickelhaltigen Sperrschicht 9 gegenüber der chromhaltigen Verschleißschicht 8. Die beim Bremsen entstehende Wärme wird schneller von der nickelhaltigen Sperrschicht 9 als vom Grundkörper 7 aufgenommen. Eine so genannte Hotspotbildung lässt sich damit reduzieren. Die weiche Sperrschicht 9 verhindert weiterhin, dass dann, wenn sich erste Risse in der Verschleißschicht gebildet haben, diese bis zum Grundkörper 7 fortschreiten. Sie wirkt daher vorteilhaft als Rissstopper.

Ein korrosiver Angriff des Werkstoffs des Grundkörpers 7 wird dadurch und durch die Korrosionsbeständigkeit der Sperrschicht 9 selbst verhindert. Ein Abplatzen der Schicht infolge Korrosion tritt nicht mehr ein. Die Sperrschicht 9 weist eine Dicke von 0,05 bis 0,1 mm auf. Besonders bewährt haben sich ferner wiederum axiale Spritzbeschichtungsdicken von 0,3 bis 1,5 mm, vorzugsweise 0,5 bis 1,2 mm, insbesondere 0,6 bis 0,9 mm.

Bei einer weiteren Spritzbeschichtung wird ein Spritzwerkstoff aus legiertem oder unlegiertem Stahl benutzt. Besonders bevorzugt ist beispielsweise die Werkstoff-Nr. 1.4122 mit einer Zusammensetzung aus 16% Cr; 0,44% Ni; 0,43% Mn; 1,01% Mo; und 0,36% C.

In einem sechsten Verfahrensschritt VS6 erfolgt ein Endbearbeiten 18 der Verschleißschicht 8. Diese kann beispielsweise eine abtragende Bearbeitung wie Schlichten oder vorzugsweise Schleifen sein. Auch eine spanlose Bearbeitung wie zum Beispiel Glattwalzen ist vorteilhaft. Als abschließende Endbearbeitung eignet sich vorteilhaft Feindrehen. So lässt sich eine definierte Rauigkeit mit bekannten und bewährten Bearbeitungsverfahren erstellen, wobei ein aufgearbeiteter Rotor 1 mit größerer Haltbarkeit und besseren Eigenschaften als ein Originalersatzteil erreicht wird.

Obwohl die vorliegende Erfindung vorstehend anhand eines bevorzugten Ausführungsbeispiels beschrieben wurde, ist sie darauf nicht beschränkt, sondern auf vielfältige Art und Weise modifizierbar.

So kann zum Beispiel bei flachen Bremsscheiben nach Aufbringen 17 der Verschleißschicht 8 ein Induktionsverfahren zur Wärmebehandlung angewandt werden, bei dem die Reibflächen stark erhitzt werden und die Bremsscheiben sofort nach der Erwärmung aufeinander gestapelt in einem abgeschlossenen Raum die Wärme nur sehr langsam wieder abgeben.

Im letzten Verfahrensschritt VS6 ist es nach dem Endbearbeiten denkbar, dass sich ein Verpacken und Lagern der aufgearbeiteten Rotoren 1 anschließt, wobei das Verpacken der Rotoren 1 gleichzeitig die Herstellung einer Versandbereitschaft einschließen kann.

### Bezugszeichenliste

- 1: Rotor
- 2, 3: Reibring
- 4: Steg
- 5: Lüftkanal
- 6: Ansatz
- 7: Grundkörper
- 8: Verschleißschicht
- 9: Sperrschicht
- 10: Sortieren
- 11: Prüfen
- 12: Ausschuss
- 13: Waschen
- 14: Entrosten
- 15: Vermessen
- 16: Bearbeiten
- 17: Aufbringen der Verschleißschicht
- 18: Endbearbeiten
- VS1...6: Verfahrensschritt

## Patentansprüche

1. Verfahren zum Aufarbeiten eines Rotors (1) einer Reibungsbremse, wobei der Rotor (1) eine Bremsscheibe oder eine Bremstrommel ist und einen Grundkörper (7) aus einem Eisengusswerkstoff aufweist, mit den folgenden Verfahrensschritten:
(VS1) Sortieren von gesammelten Rotoren (1) nach unterschiedlichem Aufbau und Abmessungen und Ausschließen von defekten Rotoren (1);
(VS2) Reinigen der sortierten Rotoren (1);
(VS3) Prüfen der gereinigten Rotoren (1) auf Eignung;
(VS4) Bearbeiten der geprüften geeigneten Rotoren (1);
(VS5) Aufbringen von Verschleißschichten (8) auf die Rotoren (1); und
(VS6) Endbearbeiten der aufgebrachten Verschleißschichten (8) und Bereitstellen der aufgearbeiteten Rotoren (1).

2. Verfahren nach Anspruch 1, **dadurch gekennzeichnet, dass** der Verfahrensschritt (VS2) Reinigen die Teilschritte Waschen und Entrosten aufweist.

3. Verfahren nach Anspruch 1 oder 2, **dadurch gekennzeichnet, dass** der Verfahrensschritt (VS6) Endbearbeiten abtragende und/oder umformende Teilschritte aufweist.

4. Verfahren nach einem der Ansprüche 1 bis 3, **dadurch gekennzeichnet, dass** die im Verfahrensschritt (VS5) aufgebrachte Verschleißschicht (8) eine metallische Spritzbeschichtung ist, welche im Flamm-, Lichtbogen- oder Plasmaspritzbeschichtungsverfahren oder im Explosionsbeschichtungsverfahren aufgebracht wird und aus einem härteren Metall als der Grundkörper (7) besteht, welches oxidationsresistenter und verschleißresistenter als der Grundkörper (7) ist, und wobei die Spritzbeschichtung mittels eines Spritzdrahtes ausgeführt wird, der einen Cr-Gehalt von mehr als 20 Gewichtsprozent aufweist.

5. Verfahren nach Anspruch 4, **dadurch gekennzeichnet, dass** der Spritzdraht einen Cr-Gehalt von 25 bis 30 Gewichtsprozent, insbesondere 28 Gewichtsprozent aufweist.

6. Verfahren nach Anspruch 4 oder 5, **dadurch gekennzeichnet, dass** der Spritzdraht einen Kohlenstoffgehalt von mindestens 0,5 Gewichtsprozent aufweist.

7. Verfahren nach einem der Ansprüche 1 bis 6, **dadurch gekennzeichnet, dass** auf dem Grundkörper (7) im Verfahrensschritt (VS5) vor dem Aufbringen der Verschleißschicht (8) eine Sperrschicht (9) aufgebracht wird, welche aus einem weicheren metallischen Material als die Verschleißschicht (8) besteht.

8. Verfahren nach Anspruch 7, **dadurch gekennzeichnet, dass** die Sperrschicht (9) eine Dicke von 0,05 bis 0,1 mm aufweist.

9. Verfahren nach Anspruch 7 oder 8, **dadurch gekennzeichnet, dass** die Sperrschicht (9) molybdänhaltig ist.

10. Verfahren nach einem der Ansprüche 7 bis 9, **dadurch gekennzeichnet, dass** die Sperrschicht (9) nickelhaltig ist.

11. Verfahren nach einem der Ansprüche 1 bis 10, **dadurch gekennzeichnet, dass** im Verfahrensschritt (VS5) nach dem Aufbringen der Verschleißschicht (8) eine Wärmebehandlung durch geführt wird.

12. Verfahren nach Anspruch 11, **dadurch gekennzeichnet, dass** die Wärmebehandlung nach dem Aufbringen der Verschleißschicht (8) bei ca. 650°C zwischen 600°C und 700°C durchgeführt wird.

13. Verfahren nach Anspruch 11 oder 12, **dadurch gekennzeichnet, dass** die Wärmebehandlung mittels eines Induktionsverfahrens durchgeführt wird.

14. Verfahren nach Anspruch 13, **dadurch gekennzeichnet, dass** als Wärmebehandlung ein Induktionsverfahren eingesetzt wird, bei dem die Verschleißschicht (8) stark erhitzt wird und der Rotor (1) sofort nach der Erwärmung relativ zum Erhitzen langsam wieder abgekühlt wird.

15. Verfahren nach einem der Ansprüche 1 bis 3, **dadurch gekennzeichnet, dass** die im Verfahrensschritt (VS5) aufgebrachte Verschleißschicht (8) eine metallische Spritzbeschichtung ist, welche im Flamm-, Lichtbogen- oder Plasmaspritzbeschichtungsverfahren oder im Explosionsbeschichtungsverfahren aufgebracht wird und aus einem härteren Metall als der Grundkörper (7) besteht, welches oxidationsresistenter und verschleißresistenter als der Grundkörper (7) ist, und wobei die Spritzbeschichtung aus einem unlegierten oder legierten Stahl besteht.

16. Verfahren nach Anspruch 15, **dadurch gekennzeichnet, dass** die Verschleißschicht (8) aus einer Cr enthaltenden Stahllegierung besteht.

17. Verfahren nach Anspruch 16, **dadurch gekennzeichnet, dass** der Cr-Gehalt der Verschleißschicht (8) zwischen 10 und 20% liegt.

18. Verfahren nach Anspruch 16 oder 17, **dadurch gekennzeichnet, dass** der Cr-Gehalt der Verschleißschicht (8) zwischen 13 und 19% liegt.

19. Verfahren nach einem der Ansprüche 16 bis 18, **dadurch gekennzeichnet, dass** der Cr-Gehalt der Verschleißschicht (8) zwischen 15 und 17% liegt.

20. Verfahren nach einem der Ansprüche 16 bis 19, **dadurch gekennzeichnet, dass** der Cr-Gehalt der Verschleißschicht (8) bei 16% liegt.

21. Verfahren nach einem der Ansprüche 15 bis 20, **dadurch gekennzeichnet, dass** der die Verschleißschicht (8) bildende legierte Stahl folgende Zusätze enthält:
16% Cr;
0,44% Ni;
0,43% Mn;
1,01% Mo; und
0,36% C.

22. Verfahren nach einem der Ansprüche 15 bis 21, **dadurch gekennzeichnet, dass** die Verschleißschicht (8) eine axiale Erstreckung von 0,3 bis 1,5 mm aufweist.

23. Verfahren nach einem der Ansprüche 15 bis 22, **dadurch gekennzeichnet, dass** die Verschleißschicht (8) eine axiale Erstreckung von 0,5 bis 1,2 mm aufweist.

24. Verfahren nach einem der Ansprüche 15 bis 23, **dadurch gekennzeichnet, dass** die Verschleißschicht (8) eine axiale Erstreckung von 0,6 bis 0,9 mm aufweist.

25. Verfahren nach einem der Ansprüche 15 bis 24, **dadurch gekennzeichnet, dass** die Verschleißschicht (8) eine axiale Erstreckung von 0,7 mm aufweist.

26. Verfahren nach einem der Ansprüche 15 bis 24, **dadurch gekennzeichnet, dass** das Reinigen im Verfahrensschritt (VS2) ein Aufrauen der Oberfläche des Rotors (1) und/oder ein Beseitigen von Oxidationsschichten durch Partikelstrahlen aufweist.

27. Aufgearbeiteter Rotor (1) einer Reibungsbremse, wobei der Rotor (1) eine Bremsscheibe oder eine Bremstrommel ist und einen Grundkörper (7) aus einem Eisengusswerkstoff aufweist, und wobei die Aufarbeitung des Rotors (1) nach dem Verfahren gemäß einem der Ansprüche 1 bis 14 oder gemäß einem der Ansprüche 15 bis 26 durchgeführt ist.
